# EUROPEAN PATENT APPLICATION

(11) **EP 4 811 327 A1**
(43) Date of publication of application: **23.09.2026**
(21) Application number: 26165188.9
(22) Date of filing: 16.03.2026
(51) Int. Cl.: G08G 5/20, G06V 10/82, G08G 5/21, G08G 5/22, G08G 5/26, G08G 5/55, G08G 5/70

(54) **SYSTEM FOR AUTOMATED PILOT REPORT SUBMISSION AND DISSEMINATION**

(30) Priority: 21.03.2025 US 202563775658 P
(71) Applicant: Toll, Eric C., Elgin, Illinois 60124 (US)
(72) Inventor: Toll, Eric C., Elgin, Illinois 60124 (US)
(74) Representative: Cabinet Chaillot

(57) **Abstract**

A computer-implemented system and method for automated Pilot Weather Report (PIREP) submission and dissemination is disclosed. The system monitors air traffic control communication frequencies and receives manual pilot submissions to capture live audio communications containing potential PIREP data. The captured audio is subjected to noise reduction and audio enhancement processing before being transcribed using an aviation-specific speech recognition engine. Natural language processing algorithms analyze the transcribed text to detect PIREP-related keywords and extract structured aviation data including location, altitude, aircraft type, and observed weather phenomena. A machine learning-based anomaly detection validation engine cross-references the extracted data against real-time external aviation data sources to confirm accuracy. An interactive user interface displays active PIREPs on a dynamic map and provides tailored location-based weather alerts to registered users.

## Description

### CROSS REFERENCE TO RELATED APPLICATION

This application claims the benefit of priority of U.S. provisional application number 63/775,658, filed 03/21/2025, the contents of which are herein incorporated by reference.

### BACKGROUND OF THE SUBJECT DISCLOSURE

The subject disclosure relates generally to aviation technology and, more particularly, to a computer-implemented system and method for the automated collection, processing, validation, and dissemination of Pilot Weather Reports (PIREPs) using speech recognition, natural language processing (NLP), machine learning-based anomaly detection, and real-time data integration with aviation regulatory authorities and third-party systems.

Pilot Weather Reports, commonly known as PIREPs, are in-flight reports of actual weather conditions encountered by an aircraft, used to verify forecasts and alert other pilots to hazards like icing, turbulence, or wind shear, and include first-hand observations of atmospheric conditions reported by pilots in flight. PIREPs constitute one of the most valuable sources of real-time weather data in aviation, providing information on turbulence, icing, wind shear, cloud tops, visibility, and other flight-safety-critical phenomena that may not be captured by ground-based or satellite weather systems. Timely and accurate PIREPs are essential for flight dispatch, air traffic management, and in-flight decision-making by pilots and airlines alike.

Despite their critical importance, the current PIREP collection and dissemination infrastructure suffers from significant inefficiencies. In contemporary practice, pilots submit PIREPs verbally to air traffic control (ATC) personnel, who are responsible for entering the data into the Federal Aviation Administration's (FAA) reporting systems. However, ATC workload constraints frequently prevent timely manual entry, resulting in delayed or lost reports. The FAA's proprietary online submission portal, while available to pilots, is cumbersome, slow, and ill-suited for real-time in-cockpit use.

Consequently, PIREPs are chronically underreported. Studies and industry analyses have consistently documented that a large proportion of significant weather events go unreported due to the friction inherent in the current manual submission process. This underreporting degrades the quality and coverage of real-time weather data available to the aviation system, increasing risk to flight operations and reducing overall airspace efficiency.

Existing aviation data systems have begun to incorporate automated weather observation stations (AWOS/ASOS), satellite-derived weather products, and flight data monitoring (FDM) systems. However, none of these fully replicate the qualitative, in-situ observational value of a PIREP. Automated systems that could capture, parse, validate, and disseminate PIREP data in real time from verbal cockpit or ATC communications would represent a substantial improvement over the prior art.

Prior attempts to automate aspects of PIREP collection have been limited in scope, often focusing on single-channel data capture, lacking aviation-specific speech recognition capabilities, or failing to integrate with real-time external validation systems and multi-channel dissemination platforms (e.g., the FAA, airline operations centers, aviation weather applications, and air navigation service providers).

As can be seen, there is a need for a comprehensive, end-to-end automated system for PIREP submission and dissemination that leverages advanced speech recognition, natural language processing, machine learning anomaly detection, real-time external data validation, and seamless multi-party dissemination, while providing an interactive user interface for pilots, controllers, and aviation stakeholders.

### SUMMARY OF THE SUBJECT DISCLOSURE

The subject disclosure provides a computer-implemented system and method for automated PIREP submission and dissemination that overcomes the deficiencies of the prior art by automating the capture, transcription, validation, formatting, and distribution of PIREP data through a scalable, cloud-based architecture.

In a first aspect, the subject disclosure provides a computer-implemented method for automated PIREP submission and dissemination, comprising: (a) monitoring one or more air traffic control frequencies and receiving manual pilot submissions to capture audio communications; (b) applying noise reduction filters and natural language processing (NLP) to the captured audio to extract and transcribe PIREP-related data; (c) timestamping and combining the transcribed data from all input sources; (d) determining whether the captured data is complete, and if not, requesting manual input or retrying automated processing; (e) validating the transcribed data using machine learning-based anomaly detection; (f) flagging incomplete or anomalous data for human review and correction; (g) upon successful validation, storing the validated PIREP in a relational database; (h) formatting the validated PIREP data in compliance with applicable FAA regulatory standards; (i) verifying correct formatting and, if incorrect, adjusting and retrying; (j) distributing the formatted PIREP to the FAA, airline operations centers, flight planning applications, and aviation weather platforms; (k) displaying the PIREP on an interactive map interface; (I) providing tailored, location-based weather alerts to relevant stakeholders; and (m) securely archiving PIREPs for historical reference once they are no longer operationally needed.

In a second aspect, the subject disclosure provides a system for automated PIREP submission and dissemination, comprising: one or more processors; at least one non-transitory computer-readable storage medium storing instructions that, when executed by the one or more processors, cause the system to perform the method described herein; an audio input subsystem configured to capture live audio from ATC communications and pilot-initiated submissions; a speech recognition engine configured for aviation-specific terminology; a natural language processing module configured to detect PIREP-related keywords and extract structured aviation data; a validation engine configured to perform real-time cross-referencing against external aviation data sources; a formatting and compliance module configured to generate FAA-compliant PIREP messages; a dissemination interface configured to transmit PIREPs to the FAA and third-party systems via secure APIs; an interactive user interface displaying submitted PIREPs on a map with real-time weather alerts; and a cloud-based data aggregation and archival subsystem.

In a third aspect, the subject disclosure provides a non-transitory computer-readable medium storing instructions that, when executed by one or more processors, cause a computing system to perform the automated PIREP submission and dissemination method described herein.

A principal object of the subject disclosure is to significantly reduce the latency between a pilot's observation of a meteorological condition and the availability of that observation as structured data to the broader aviation community.

Another object of the subject disclosure is to increase the volume and accuracy of PIREP data available to the FAA and aviation stakeholders by removing friction from the submission process and automating validation.

A further object of the subject disclosure is to provide a platform-agnostic, scalable architecture that can integrate with existing FAA systems, airline operations centers, and third-party aviation applications without requiring modification of those systems.

Still another object of the subject disclosure is to provide a feedback loop for continuous improvement of speech recognition and anomaly detection performance using operational data.

These and other features, aspects and advantages of the present subject disclosure will become better understood with reference to the following drawings, description and claims.

### BRIEF DESCRIPTION OF THE DRAWINGS

The accompanying drawings, which are incorporated herein and constitute a part of this specification, illustrate embodiments of the subject disclosure and together with the description serve to explain the principles of the subject disclosure.

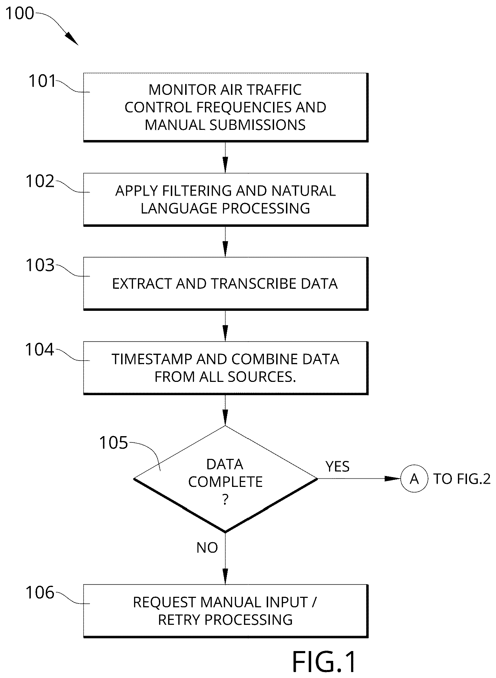

FIG. 1 is a flowchart of an exemplary embodiment of the subject disclosure, illustrating the input phase of the automated PIREP submission and dissemination process, including monitoring of air traffic control frequencies, application of filtering and natural language processing, extraction and transcription of data, timestamping and combining data from multiple sources, and a decision branch for data completeness verification with a manual input/retry loop.

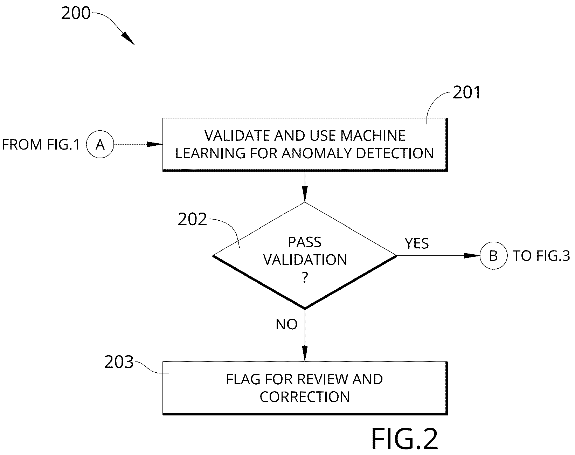

FIG. 2 is a flowchart of an exemplary embodiment of the subject disclosure, illustrating the processing phase, including validation of transcribed data using machine learning-based anomaly detection and a decision branch for pass/fail validation with a flagging and correction loop.

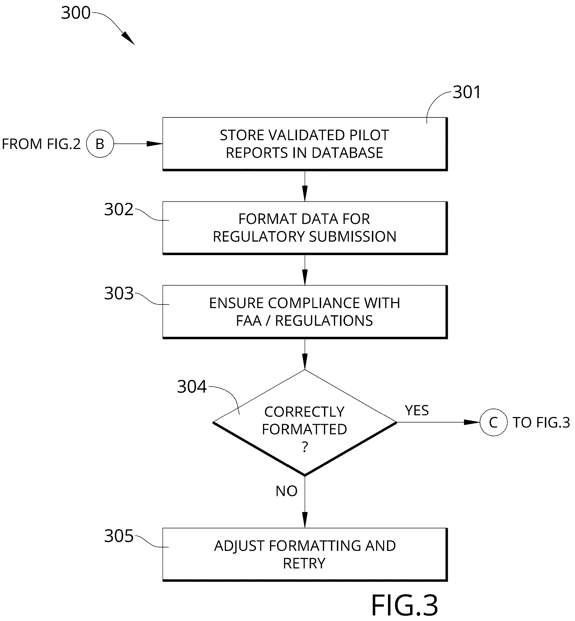

FIG. 3 is a flowchart of an exemplary embodiment of the subject disclosure, illustrating the integration phase, including storage of validated PIREPs in a database, formatting for regulatory submission, ensuring compliance with FAA regulations, and a formatting verification loop with an adjust-and-retry mechanism.

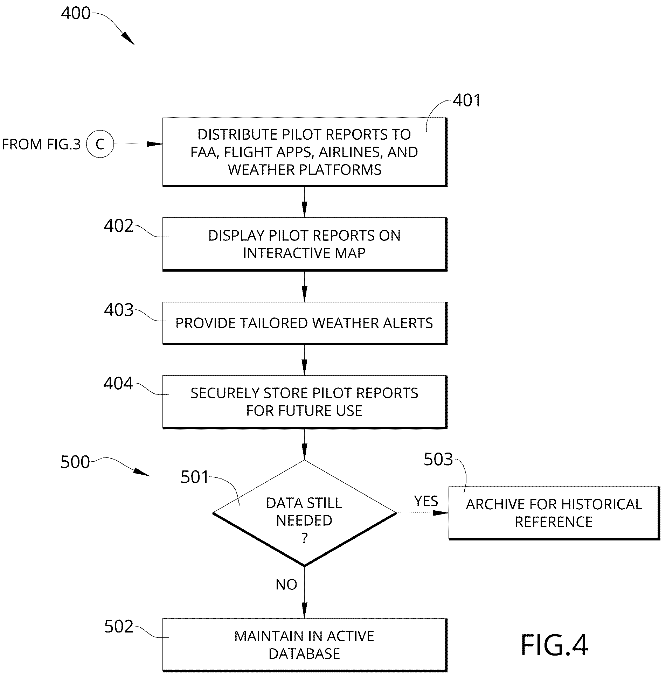

FIG. 4 is a flowchart of an exemplary embodiment of the subject disclosure, illustrating the output and archiving phase, including distribution of PIREPs to the FAA and aviation stakeholders, displaying an interactive map, provision of tailored weather alerts, and a decision branch for active retention versus historical archiving of PIREP data.

### DETAILED DESCRIPTION OF THE SUBJECT DISCLOSURE

The following detailed description is of the best currently contemplated modes of carrying out exemplary embodiments of the subject disclosure. The description is not to be taken in a limiting sense but is made merely for the purpose of illustrating the general principles of the subject disclosure, since the scope of the subject disclosure is best defined by the appended claims.

Broadly, the subject disclosure provides a comprehensive end-to-end system and method for automating the collection, processing, validation, formatting, and dissemination of Pilot Reports (PIREPs). The system captures live audio from air traffic control (ATC) frequencies and pilot-initiated inputs, applies state-of-the-art speech recognition and natural language processing (NLP) to extract structured PIREP data, validates that data against real-time external aviation data sources, formats the data into FAA-compliant PIREP messages, and distributes those messages to the FAA, airlines, flight planning applications, and weather platforms. The system provides an interactive user interface with map visualization and tailored weather alerts, and archives historical PIREP data for future reference and machine learning improvement.

Referring generally to FIGS. 1-4, the subject disclosure describes a four-phase system: (1) Input Phase (FIG. 1), (2) Processing Phase (FIG. 2), (3) Integration Phase (FIG. 3), and (4) Output and Archiving Phase (FIG. 4). These phases correspond to the logical flow of a PIREP from initial audio capture through final distribution and archival. Each of these phases is described in detail below.

The system of the subject disclosure includes the following functional subsystems, which cooperate in a seamless workflow. Referring to FIG. 1:
(a) Audio Input Subsystem (Component 101). The audio input subsystem is configured to continuously monitor one or more designated aviation communication frequencies, including but not limited to ATC voice channels, CTAF (Common Traffic Advisory Frequency) channels, ATIS (Automatic Terminal Information Service) broadcasts, and pilot-initiated digital or telephonic submissions. In certain embodiments, the subsystem interfaces with public audio aggregation services (e.g., LiveATC.net) as well as proprietary airline and ATC communication systems via secure API connections. Audio streams are buffered in real time and segmented into processing windows suitable for downstream transcription.
(b) Noise Reduction and Audio Enhancement Module (Component 102). Prior to transcription, captured audio is subjected to a multi-stage preprocessing pipeline. This pipeline includes, without limitation: adaptive noise cancellation (ANC) using spectral subtraction algorithms to remove ambient cockpit and radio static; dynamic range normalization to equalize volume levels across different transmission sources; bandpass filtering calibrated for the frequency characteristics of aviation radio communications (typically 300 Hz to 3,000 Hz); and voice activity detection (VAD) to isolate speech segments from silence or non-speech noise. In certain embodiments, FFmpeg and Pydub libraries, or equivalent tools, are employed for audio processing. The output of this module may be a clean, enhanced audio stream suitable for high-accuracy transcription.
(c) Speech Recognition Engine (Component 103). The enhanced audio stream is processed by an aviation-specific speech recognition engine. In preferred embodiments, the engine is based on a large-vocabulary continuous speech recognition (LVCSR) model fine-tuned on a corpus of aviation communications, including ICAO (International Civil Aviation Organization) phraseology, FAA ATC transcripts, and historical PIREP audio samples. Suitable base models include transformer-based automatic speech recognition (ASR) architectures. The output is a text transcript of the captured aviation communication.
(d) Natural Language Processing and Keyword Detection Module (Component 104). The text transcript is analyzed by an NLP module configured to (i) detect the presence of PIREP-related keywords and trigger phrases (e.g., "PIREP," "turbulence," "icing," "IMC," "mountain wave," "wind shear"); (ii) extract structured PIREP data elements including, without limitation: location (as latitude/longitude coordinates or NAVAID/fix identifiers), altitude (in feet MSL or FL), aircraft type (ICAO aircraft type designator), observed weather phenomenon, intensity, and pilot time of observation; and (iii) perform conditional logic-based trigger analysis to determine whether the communication constitutes a reportable PIREP event. In certain embodiments, the NLP module employs named-entity recognition (NER) and dependency parsing trained on aviation-domain data. The output is a structured data object containing candidate PIREP fields for downstream validation.
(e) Validation Engine (Component 201), see FIG. 2. The candidate PIREP data object is passed to the validation engine, which performs real-time cross-referencing against one or more external aviation data sources via secure API calls. External sources include, without limitation: FAA aeronautical data (aircraft registration and type), ADS-B position data (to verify aircraft location), aviation weather databases (to cross-reference reported phenomena with radar and satellite data), and NOTAMs (Notices to Air Missions). The validation engine employs machine learning-based anomaly detection to identify implausible parameter combinations (e.g., reported icing at altitudes and temperatures inconsistent with atmospheric modeling). PIREPs passing validation are assigned a confidence score and marked for integration. PIREPs failing validation are flagged for human review and queued for correction or rejection.
(f) Database Storage Subsystem (Component 301), referring to FIG. 3. Validated PIREPs are stored in a structured relational database with timestamps, geolocation metadata, validation confidence scores, and source attribution. In preferred embodiments, the database is hosted on a cloud infrastructure with redundant storage, encryption at rest, and role-based access controls. The database supports indexing by geographic region, altitude band, time window, and weather phenomenon type to enable efficient querying by downstream dissemination systems.
(g) Formatting and Compliance Module (Components 302-304). Validated and stored PIREPs are formatted into standardized PIREP messages in accordance with FAA Order 7110.10 (Flight Services) and applicable ICAO Annex 3 standards. The module performs an automated compliance verification step to confirm that all mandatory PIREP fields are populated, properly encoded, and within valid parameter ranges. PIREPs that fail compliance verification are routed to an automated adjustment-and-retry loop (Component 304) to correct formatting errors prior to dissemination.
(h) Dissemination Interface (Components 401-404), referring to FIG. 4. The dissemination interface transmits formatted PIREPs simultaneously to: (i) the FAA's Aviation Weather Center (AWC) and PIREP ingestion systems via FAA-designated secure APIs; (ii) airline dispatch and operations control centers via industry-standard aviation data interchange formats (e.g., ARINC 633, ACARS, or equivalent); (iii) third-party aviation weather applications and Electronic Flight Bag (EFB) platforms (e.g., ForeFlight, Garmin Pilot, or equivalent) via REST or WebSocket APIs; and (iv) national and international aviation weather aggregation platforms.
(i) Interactive User Interface (Components 501-503), see FIG. 4. The interactive user interface (UI) displays submitted and pending PIREPs on a dynamic map with geographic layering, altitude filtering, and weather phenomenon categorization. The UI provides real-time tailored weather alerts to registered users based on their filed flight plans, current position (via GPS integration), or user-configured alert preferences. In certain embodiments, the UI is accessible via web browser, mobile application (iOS and Android), and Electronic Flight Bag integration. Pilots and dispatchers may also use the UI to manually enter PIREPs in structured data entry forms, which are routed through the same validation and dissemination pipeline.
(j) Data Aggregation and Archival Subsystem. PIREPs that are no longer operationally active (i.e., beyond their valid observation window, typically two hours for most phenomena) are transitioned from the active operational database to a long-term historical archive. The archive is indexed by date, geographic region, altitude, and type of phenomenon, and is made available for retrospective analysis, machine learning training datasets, regulatory compliance audits, and flight safety investigations.
(k) Feedback Loop and Continuous Learning Module. The system incorporates a machine learning feedback loop in which validated PIREPs, correction data from flagged PIREPs, and user-provided feedback are used to continuously retrain and refine the speech recognition engine, the NLP keyword detection model, and the anomaly detection model. In preferred embodiments, retraining occurs on a scheduled basis (e.g., weekly or monthly) using accumulated operational data, with performance metrics tracked against a held-out validation set.
(l) Redundancy and Fail-Safe Mechanisms. The system is designed with redundancy at each critical processing stage. In the event of a failure in the automated processing pipeline, the system is configured to queue unprocessed audio and data for retry upon restoration of service. For PIREPs that cannot be processed automatically within a defined time threshold, the system generates an alert to designated human operators for manual processing. Cloud-based deployment ensures high availability and geographic redundancy.

Referring now to FIG. 1, the input phase of the subject disclosure is illustrated beginning at step 100. At step 101, the system continuously monitors air traffic control frequencies and receives manual PIREP submissions from pilots and dispatchers. At step 102, the system applies noise reduction filters and NLP algorithms to the captured audio to extract and transcribe PIREP-related data, including location, altitude, aircraft type, weather phenomenon, and observation time. At step 103, the transcribed data is timestamped and combined from all input sources into a unified data record. At step 104, the system performs a data completeness check: if the data is complete (YES branch), the system advances to the processing phase (represented by connector 'A' to FIG. 2). If the data is incomplete (NO branch), the system at step 105 requests manual input from an operator or retries the automated processing pipeline. Upon completion of the retry or manual input, the system returns to step 104 for another completeness determination.

Referring now to FIG. 2, the processing phase is entered via connector 'A' from FIG. 1 at step 200. At step 201, the system applies the validation engine, employing machine learning-based anomaly detection algorithms to assess the accuracy, plausibility, and consistency of the extracted PIREP parameters. At step 202, the system evaluates whether the data passes validation. If validation is passed (YES branch), the system advances to the integration phase via connector 'B' to FIG. 3. If validation fails (NO branch), the system at step 203 flags the data for human review and correction. An operator may correct the identified anomalies or reject the data record, following which the corrected record re-enters the validation process.

Referring now to FIG. 3, the integration phase is entered via connector 'B' from FIG. 2 at step 300. At step 301, validated PIREP records are stored in the relational database with full metadata. At step 302, the system formats the validated PIREP data for regulatory submission in accordance with applicable FAA and ICAO standards. At step 303, the system verifies compliance of the formatted PIREP with applicable regulatory requirements. At step 304, a compliance check is performed: if correctly formatted (YES branch), the system advances to the output and archiving phase via connector 'C' to FIG. 4. If incorrectly formatted (NO branch), the system at step 305 adjusts the formatting parameters and retries the formatting and compliance verification process, returning to step 303.

Referring now to FIG. 4, the output and archiving phase is entered via connector 'C' from FIG. 3 at step 400. At step 401, the system distributes the compliant PIREP simultaneously to the FAA, commercial flight planning applications, airline operations centers, and aviation weather platforms. At step 402, the submitted PIREP is displayed on the interactive map interface of the user interface. At step 403, the system provides tailored location-based and preference-based weather alerts to registered users. At step 500, the system assesses whether the PIREP data is still operationally needed (e.g., within its valid observation window). If still needed (YES branch), at step 501 the PIREP is maintained in the active database for continued operational reference. At step 502, the PIREP continues to be displayed and actively distributed to stakeholders. At step 503, the PIREP data is securely stored for future operational reference. If no longer operationally needed (NO branch), the PIREP is transitioned from the active database to the historical archive for long-term reference.

The subject disclosure relies on conditional logic and decision-making subroutines throughout the processing pipeline. If-then-else relationships govern the routing of PIREP data through the system based on data completeness, validation outcomes, and formatting compliance. Specifically: (i) if a PIREP communication is detected in monitored audio, the system initiates transcription and NLP processing; (ii) if required PIREP fields are missing from the transcribed data, the system initiates a manual input or retry loop; (iii) if the extracted data passes anomaly detection, the system advances to database storage and formatting; (iv) if the extracted data fails anomaly detection, the system routes the record to human review; (v) if the formatted PIREP satisfies FAA compliance requirements, the system disseminates the PIREP; and (vi) if the formatted PIREP fails compliance verification, the system initiates an automated formatting correction and retry sequence. This structured conditional logic ensures that only validated, compliant PIREP data reaches end users and regulatory systems.

The system of the subject disclosure is deployed on a scalable cloud-based infrastructure. In certain embodiments, the network may refer to any interconnecting system capable of transmitting audio, video, signals, data, messages, or any combination of the preceding, including but not limited to a public switched telephone network (PSTN), a local area network (LAN), a metropolitan area network (MAN), a wide area network (WAN), the Internet, a wireline or wireless network, an enterprise intranet, or any suitable combination thereof.

The computing systems of the subject disclosure may take any suitable physical form including, without limitation, a virtual machine (VM), an embedded computing system, a system-on-chip (SOC), a desktop computing system, a laptop or notebook computing system, a smartphone, an interactive kiosk, a mainframe, a server cluster, or a cloud-based computing environment spanning multiple geographic regions. In particular embodiments, the computing system comprises a processor, non-volatile memory, a user interface, and a communication interface including a network interface controller (NIC) configured to communicate over wired or wireless networks, including Wi-Fi, cellular (e.g., GSM, LTE, 5G), and Bluetooth networks.

The computing systems may execute any suitable operating system, including but not limited to Linux-based operating systems, Windows, Unix, macOS, or any cloud-native operating environment. In certain embodiments, the system may include one or more microservices architectures with containerized deployment (e.g., Docker, Kubernetes) to ensure modularity, scalability, and fault tolerance.

The components, steps, and elements of the subject disclosure may be reconfigured or interchanged in various ways while maintaining the same overall functional result. For example, the order of noise reduction preprocessing steps may be adjusted based on environmental conditions. The speech recognition model may be substituted with alternative ASR engines capable of handling aviation-specific terminology. The external validation API integrations may be replaced with locally hosted aviation databases for offline or low-connectivity operating environments. The user interface may be configured to prioritize PIREP visualization or PIREP submission depending on user role and operational context.

Furthermore, while the subject disclosure is primarily described in the context of aviation PIREP processing, the underlying architecture is adaptable for analogous real-time voice-based reporting applications in other domains, including, without limitation: maritime incident reporting, emergency services incident management, railway operations monitoring, and training and simulation environments. These adaptations do not depart from the inventive concept of the present disclosure.

The primary outputs of the system of the subject disclosure include: (a) FAA-compliant structured PIREP messages transmitted to aviation regulatory authorities; (b) real-time PIREP data feeds transmitted to airline operations centers, flight planning applications, and weather platforms; (c) interactive map visualizations of active PIREPs with geographic, altitude, and phenomenon-type filters; (d) tailored location-based and preference-based weather alerts to registered users; (e) exportable PIREP data files in standard formats including XML, JSON, and CSV for integration with external aviation management systems; (f) archived historical PIREP datasets suitable for retrospective weather analysis, machine learning training, and regulatory audit; and (g) simulated or synthetic PIREP scenarios for aviation training and professional development.

It should be understood, of course, that the foregoing relates to exemplary embodiments of the subject disclosure and that modifications may be made without departing from the spirit and scope of the subject disclosure as set forth in the following claims.

## Claims

1. A computer-implemented method for automated pilot weather report (PIREP) collection and dissemination, comprising:
continuously monitoring, by one or more processors, one or more aviation communication channels to capture audio communications containing potential PIREP data;
applying, by the one or more processors, speech recognition and natural language processing (NLP) to the captured audio communications to automatically extract structured PIREP data elements therefrom;
validating, by the one or more processors, the extracted PIREP data elements using machine learning-based anomaly detection; and
upon successful validation, automatically formatting the validated PIREP data into a regulatory-compliant PIREP message and transmitting the formatted PIREP message to one or more aviation data recipients.

2. The method of claim 1, wherein monitoring the one or more aviation communication channels comprises continuously monitoring at least one of air traffic control (ATC) voice communication frequencies, common traffic advisory frequency (CTAF) channels, automatic terminal information service (ATIS) broadcasts, and pilot-initiated digital or telephonic submission interfaces.

3. The method of claim 1, further comprising, prior to applying speech recognition, subjecting the captured audio communications to a multi-stage audio preprocessing pipeline comprising at least one of:
adaptive noise cancellation using spectral subtraction to remove ambient cockpit noise and radio static;
dynamic range normalization to equalize volume levels across transmission sources;
bandpass filtering calibrated to aviation radio communication frequency characteristics; and
voice activity detection to isolate speech segments from non-speech noise.

4. The method of claim 1, wherein applying NLP to extract structured PIREP data elements comprises:
detecting PIREP-related keywords and trigger phrases in transcribed text of the audio communications; and
extracting at least one of: geographic location expressed as latitude/longitude coordinates or navigation aid identifiers; altitude in feet mean sea level or flight level; aircraft type designator; observed weather phenomenon; phenomenon intensity; and pilot time of observation.

5. The method of claim 1, wherein validating the extracted PIREP data elements using machine learning-based anomaly detection comprises cross-referencing the extracted PIREP data elements in real time against one or more external aviation data sources comprising at least one of:
Federal Aviation Administration (FAA) aircraft registration and type data;
automatic dependent surveillance-broadcast (ADS-B) aircraft position data to verify reported aircraft location;
aviation weather databases to cross-reference reported phenomena against radar and satellite observations; and
notices to air missions (NOTAMs) relevant to the reported location and altitude.

6. The method of claim 1, further comprising:
determining whether the extracted PIREP data elements satisfy a completeness threshold; and
upon determining the extracted PIREP data elements are incomplete, performing at least one of: requesting manual input from an operator; and retrying automated processing of the captured audio communications.

7. The method of claim 1, wherein automatically formatting the validated PIREP data comprises:
formatting the validated PIREP data in accordance with applicable FAA regulatory standards;
performing an automated compliance verification to confirm all mandatory PIREP fields are populated, properly encoded, and within valid parameter ranges; and
upon detecting a formatting or compliance error, automatically adjusting formatting parameters and retrying compliance verification.

8. The method of claim 1, wherein transmitting the formatted PIREP message to one or more aviation data recipients comprises simultaneously distributing the formatted PIREP message to at least two of:
a Federal Aviation Administration (FAA) aviation weather ingestion system via a FAA-designated secure application programming interface (API);
airline dispatch and operations control centers via aviation data interchange formats;
third-party flight planning applications and Electronic Flight Bag (EFB) platforms; and
national or international aviation weather aggregation platforms.

9. The method of claim 1, further comprising:
assigning a confidence score to validated PIREP data elements; and
flagging extracted PIREP data elements that fail validation for human review and correction prior to storage or dissemination.

10. The method of claim 1, further comprising:
storing the validated PIREP data in a relational database with associated timestamps, geolocation metadata, validation confidence scores, and source attribution;
maintaining the stored PIREP data in an active operational database during a valid observation window; and
upon expiration of the valid observation window, transitioning the PIREP data from the active operational database to a long-term historical archive indexed by at least one of date, geographic region, altitude band, and weather phenomenon type.

11. The method of claim 1, further comprising updating at least one machine learning model using at least one of validated PIREP data, correction data derived from flagged PIREPs, and user-provided feedback, to continuously improve performance of at least one of: speech recognition, NLP keyword detection, and anomaly detection.

12. A system for automated pilot weather report (PIREP) collection and dissemination, comprising:
one or more processors; and
at least one non-transitory computer-readable storage medium storing instructions that, when executed by the one or more processors, cause the system to:
continuously monitor one or more aviation communication channels to capture audio communications containing potential PIREP data;
apply speech recognition and natural language processing (NLP) to the captured audio communications to automatically extract structured PIREP data elements therefrom;
validate the extracted PIREP data elements using machine learning-based anomaly detection; and
upon successful validation, automatically format the validated PIREP data into a regulatory-compliant PIREP message and transmit the formatted PIREP message to one or more aviation data recipients.

13. The system of claim 12, further comprising an audio input subsystem configured to continuously monitor at least one of air traffic control (ATC) voice communication frequencies, CTAF channels, ATIS broadcasts, and pilot-initiated digital submission interfaces, and to buffer and segment live audio streams into processing windows for downstream transcription.

14. The system of claim 12, further comprising a noise reduction and audio enhancement module configured to subject captured audio communications to a multi-stage preprocessing pipeline comprising at least one of adaptive noise cancellation, dynamic range normalization, bandpass filtering, and voice activity detection, prior to speech recognition processing.

15. The system of claim 12, further comprising a speech recognition engine based on a large-vocabulary continuous speech recognition model trained on aviation-specific communications, including at least one of ICAO phraseology, FAA air traffic control transcripts, and historical PIREP audio samples.

16. The system of claim 12, further comprising a validation engine configured to cross-reference extracted PIREP data elements in real time against one or more external aviation data sources comprising at least one of FAA aircraft registration data, ADS-B aircraft position data, aviation weather databases, and NOTAMs, and to assign a confidence score to each validated PIREP record.

17. The system of claim 12, further comprising a formatting and compliance module configured to format validated PIREP data in accordance with applicable FAA regulatory standards, verify compliance of all mandatory PIREP fields, and automatically initiate a formatting correction and retry sequence upon detecting a compliance error.

18. The system of claim 12, further comprising a dissemination interface configured to simultaneously transmit formatted PIREP messages to at least two of: a FAA aviation weather ingestion system; airline operations centers; third-party flight planning applications; and aviation weather aggregation platforms.

19. The system of claim 12, further comprising;
a relational database configured to:
store validated PIREP data with associated timestamps, geolocation metadata, validation confidence scores, and source attribution;
support indexing by at least one of geographic region, altitude band, time window, and weather phenomenon type; and
transition PIREP records from an active operational database to a long-term historical archive upon expiration of a valid observation window; and
a machine learning feedback loop module configured to retrain at least one of a speech recognition model, a natural language processing keyword detection model, and an anomaly detection model using accumulated operational PIREP data comprising at least one of validated PIREPs, correction data from flagged PIREPs, and user-provided feedback.
